# EUROPEAN PATENT APPLICATION

(11) **EP 2 985 267 A1**
(43) Date of publication of application: **17.02.2016**
(21) Application number: 14782988.1
(22) Date of filing: 11.04.2014
(51) Int. Cl.: C03C 21/00, C03C 3/083, C03C 3/085, C03C 3/087, E06B 3/70

(54) **OUTDOOR CHEMICALLY STRENGTHENED GLASS PLATE**

(30) Priority: 12.04.2013 JP 2013083979
(71) Applicant: Asahi Glass Company, Limited, Tokyo 100-8405 (JP)
(72) Inventor: KOBAYASHI, Yusuke, Tokyo 100-8405 (JP); OKETANI, Yukihito, Tokyo 100-8405 (JP); KANASUGI, Tadahisa, Tokyo 100-8405 (JP); KIKUCHI, Satoshi, Tokyo 100-8405 (JP); ICHIYAMA, Yasuko, Tokyo 100-8405 (JP); KOJIMA, Hiroshi, Tokyo 100-8405 (JP)
(74) Representative: Müller-Boré & Partner Patentanwälte PartG mbB
(86) International application number: PCT/JP2014/060546
(87) International publication number: WO 2014/168246

(57) **Abstract**

To provide a chemically tempered glass plate for outdoor use that reduces concern about breakage which results from being exposed to an outdoor environment for a long period of time.

The present invention provides a chemically tempered glass plate for outdoor use 10, which has first and second main surfaces 11 a, 11b and an end surface 12 interposed between the first and second main surfaces 11 a, 11 b, wherein surface compressive stresses are formed at both the main surfaces 11 a, 11 b; a tensile stress is formed at the interior; the thickness is from 1.0 to 6.0 mm; both the main surfaces 11 a, 11 b have surface compressive stress of from 400 to 1,000 MPa; and the thicknesses of the compressive stress layers in the plate thickness direction at both the main surfaces 11 a, 11b are from 10 to 30 µm.

## Description

### TECHNICAL FIELD

The present invention relates to a chemically tempered glass plate for outdoor use, particularly to an chemically tempered glass plate for outdoor use that reduces concern about breakage which results from being exposed to an outdoor environment for a long period of time.

### BACKGROUND ART

A tempered glass plate is known wherein compressive stresses are formed at its main surfaces and a tensile stress is formed at its interior in order to improve the strength of the glass plate. Tempered glass includes a physically tempered glass obtainable by heating a glass plate, followed by quenching to form a temperature difference between its main surfaces and its interior, and a chemically tempered glass obtainable by immersing a glass plate in a molten salt to carry out ion exchange between ions having a small ion radius at the main surface side and ions having a large ion radius at the molten salt side.

With a chemically tempered glass plate, the value of compressive stresses formed at its main surfaces can be made large as compared with a physically tempered glass, and thus, to counter unexpected impacts, it used to be employed as cover glass for watches and in recent years, has been employed as cover glass for smartphones, etc. Further, at a concept level or literature level, a chemically tempered glass plate is said to be useful for vehicle windows of e.g. automobiles, trains, etc., exterior walls, etc.

On the other hand, chemically tempered glass has been regarded as not suitable for producing it to have a large area efficiently by mass production, since the time for immersion in a molten salt may sometimes be required to be as long as a few hours. Therefore, practically, it has been common to employ a physically tempered glass plate for building windows, vehicle windows, exterior walls, etc.

### DISCLOSURE OF THE INVENTION

When a glass plate is employed for building windows, vehicle windows or exterior walls, it is used so that one of its main surfaces faces outdoors. Particularly in the case of a building window or an exterior wall, once installed, it is exposed to the rain, wind and dust over a long period of time e.g. 10 years or 20 years after the installation. However, it has been unexpected how much scratches are formed on the main surface if exposed to the rain, wind and dust over a long period of time in such a manner.

As mentioned above, with a chemically tempered glass plate, the value of compressive stresses formed at its main surfaces can be made large to counter unexpected impacts, but the thicknesses in the plate thickness direction of the layers having such compressive stresses (hereinafter referred to as compressive stress layers), are very small. Therefore, there should have been potential concern about breakage of the glass plate due to scratches formed through the compressive stress layers by the outdoor environment over a long period of time. However, as mentioned above, in practice, a chemically tempered glass plate has not been used for such an application, and therefore, no attention has been paid to such concern by any body.

It is an object of the present invention to provide a chemically tempered glass plate for outdoor use that reduces concern about breakage which results from being exposed to an outdoor environment for a long period of time.

### SOLUTION TO PROBLEM

The present invention provides a chemically tempered glass plate for outdoor use, which has first and second main surfaces and an end surface interposed between the first and second main surfaces, wherein surface compressive stresses are formed at both the main surfaces; a tensile stress is formed at the interior; the thickness is from 1.0 to 6.0 mm; both the main surfaces have surface compressive stress of from 400 to 1,000 MPa; and the thicknesses of the compressive stress layers in the plate thickness direction at both the main surfaces are from 10 to 30 µm.

Further, the present invention provides laminated glass which comprises plural glass plates and an interlayer disposed between adjacent glass plates thereof, wherein at least one of the plural glass plates is a chemically tempered glass plate for outdoor use wherein the thickness is at least 1.0 mm and at most 6.0 mm; the first main surface and the second main surface of the glass plate have surface compressive stresses of from 400 to 1,000 MPa; and the thicknesses of the compressive stress layers in the plate thickness direction at both the main surfaces are from 10 to 30 µm.

Here, in the present invention, "...for outdoor use" is meant for one wherein, in an installed state, at least one of the main surfaces is exposed to an outdoor environment, and may include one wherein the other main surface faces indoors.

### ADVANTAGEOUS EFFECTS OF INVENTION

According to the present invention, it is possible to obtain a chemically tempered glass plate for outdoor use that reduces concern about breakage which results from being exposed to an outdoor environment for a long period of time.

### BRIEF DESCRIPTION OF DRAWINGS

Fig. 1 is a perspective view illustrating an example of the chemically tempered glass plate for outdoor use of the present invention.
Fig. 2 is front side schematic views of window glass.
Fig. 3 is enlarged photographs of the surfaces of building window glass plates faced outdoors for 20 years.
Fig. 4 is enlarged photographs of the surfaces of building window glass plates faced outdoors for 20 years.
Fig. 5 is diagrams illustrating a fracture test of a glass specimen.

### DESCRIPTION OF EMBODIMENTS

Now, an example of the chemically tempered glass plate for outdoor use of the present invention will be described in detail with reference to the drawings.

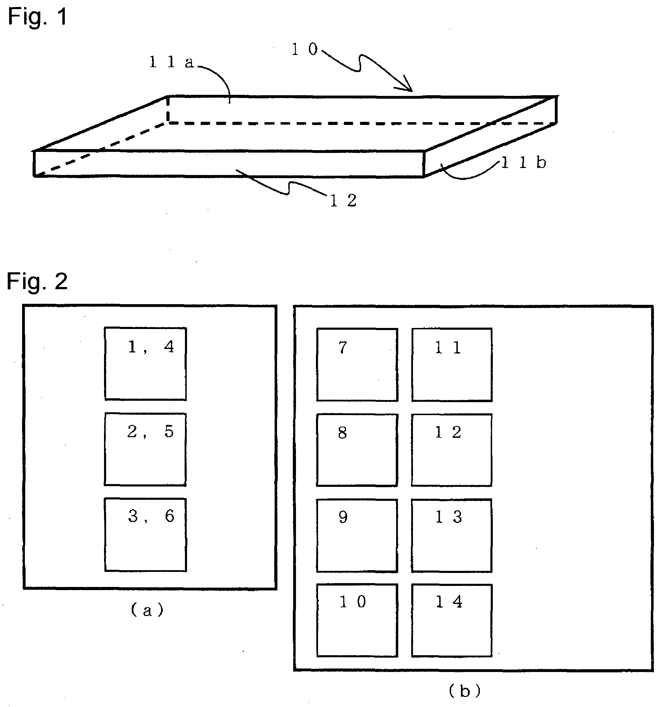

Fig. 1 is a perspective view illustrating an example of the chemically tempered glass plate for outdoor use of the present invention. The chemically tempered glass plate for outdoor use 10 has a first main surface 11 a, a second main surface 11 b and an end surface 12 interposed between the first main surface 11 a and the second main surface 11 b. The chemically tempered glass plate for outdoor use 10 has a plate thickness t of from 1.0 to 6.0 mm. The chemically tempered glass plate for outdoor use 10 has, at its main surfaces 11 a and 11 b, surface compressive stress layers each having a thickness of from 10 to 30 µm in the plate thickness direction, and the first main surfaces 11 a and 11b have surface compressive stresses of respectively, from 400 to 1,000 MPa.

The chemically tempered glass plate for outdoor use of the present invention is useful for a building window, an exterior wall, a solar cell cover glass or a vehicle window. As the building window, a window of a house or building may be exemplified, and particularly, it is useful for a window to be installed in a trafficky area. For such a window, the plate thickness is preferably from 3.0 to 6.0 mm. As the exterior wall, a sound insulating wall for a highway, etc. may be exemplified. The solar cell is installed on a roof of e.g. a house or factory in many cases, whereby light in weight is required. Therefore, in a case where the chemically tempered glass plate for outdoor use of the present invention is to be used as a solar cell cover glass, the plate thickness is preferably from 1.0 to 4.0 mm. In a case where the chemically tempered glass plate for outdoor use of the present invention is to be used as a vehicle window, the plate thickness is preferably from 1.0 to 4.0 mm. It is particularly preferred to use the chemically tempered glass plate for outdoor use of the present invention as at least one glass plate constituting the after-described laminated glass. The overall size of such a chemically tempered glass for outdoor use, i.e. the area of its main surfaces, may be preferably at least 2,500 cm², particularly preferably at least 10,000 cm², in consideration of its applications.

In these applications, the chemically tempered glass plate for outdoor use may be used as at least one of glass plates constituting double glazing or laminated glass, or all of such glass plates may be made of the chemically tempered glass plate for outdoor use. When used for laminated glass, the plate thickness of the chemically tempered glass plate for outdoor use is preferably at least 0.5 mm from the viewpoint of the strength and handling efficiency. Here, the upper limit of the plate thickness is practically sufficiently 6.0 mm, but at most 2.3 mm is preferred, since a common apparatus for producing laminated glass may thereby be utilized. Here, also as the above-mentioned chemically tempered glass plate having a plate thickness of at least 0.5 mm, a chemically tempered glass plate is used wherein surface compressive stresses of from 400 to 1,000 MPa are formed on both the main surfaces, and the thicknesses of the surface compressive stress layers in the plate thickness direction at both the main surfaces are from 10 to 30 µm.

Further, a functional film such as a heat reflecting film or an antifouling film may be formed on either one or both of the main surfaces.

The glass plate of the present invention may have a compressive stress layer formed not only at its main surfaces but also at its end surface. In a case where the glass plate is cut into a desired shape after the chemical tempering, the resulting glass plate may not have a compressive stress layer at its end surface. The compressive stress in the present invention may be formed uniformly in the main surface direction of the glass plate, or may have an in-plane distribution. According to the above-described chemical tempering treatment, the compressive stress is obtainable substantially uniformly except for treatment unevenness. Therefore, at the time of measuring various values relating to the compressive stress, the center of the main surface (in a case where the glass plate is rectangular, the point where diagonal lines intersect with each other, and in a case where it is not rectangular, a point similar thereto) may be regarded as a representative point.

The method for chemical tempering treatment to obtain the glass plate of the invention is not particularly limited, so long as it is one capable of ion exchanging Na at the glass surface with K in the molten salt, and, for example, a method of immersing glass in a heated potassium nitrate molten salt, may be mentioned. Here, in the present invention, the potassium nitrate molten salt or potassium nitrate salt includes, in addition to KNO₃, one containing KNO₃ and at most 10 mass% of NaNO₃.

The conditions for chemical tempering treatment to form compressive stress layers having desired surface compressive stresses in glass may vary depending upon e.g. the plate thickness of the glass plate, but may typically be such that the glass plate is immersed in a potassium nitrate molten salt of from 350 to 550°C for from 2 to 20 hours. From the economical viewpoint, the immersion is preferably conducted under conditions of from 350 to 500°C for from 2 to 16 hours, and a more preferred immersion time is from 2 to 10 hours.

The method for producing the glass plate of the present invention is not particularly limited, and, for example, it may be produced in such a manner that various raw materials are mixed in suitable amounts, heated and melted at from about 1,400 to 1,800°C, then homogenized by defoaming, stirring, etc., molded in a plate shape by a well known float process, down draw method, press method, etc., and after annealing, cut into a desired size.

The glass transition point Tg of glass of the glass plate in the present invention is preferably at least 400°C. It is thereby possible to prevent relaxation of the surface compressive stress at the time of ion exchange. More preferably, it is at least 550°C.

The temperature T2 at which the viscosity of glass of the glass plate in the present invention becomes 10²dPa·s, is preferably at most 1,800°C, more preferably 1,750°C.

The temperature T4 at which the viscosity of glass in the present invention becomes 10⁴dPa·s, is preferably at most 1,350°C.

The specific gravity p of glass of the glass plate in the present invention is preferably from 2.37 to 2.55.

The Young's modulus E of glass of the glass plate in the present invention is preferably at least 65 GPa, whereby the rigidity and fracture strength of glass as cover glass will be sufficient.

The Poisson's ratio σ is preferably at most 0.25, whereby the scratch resistance of glass, particularly the scratch resistance after use for a long period of time, will be sufficient.

Here, the chemically tempered glass is characterized in that it is glass comprising, as represented by mole percentage based on oxides, from 56 to 75% of SiO₂, from 1 to 20% of Al₂O₃, from 8 to 22% of Na₂O, from 0 to 10% of K₂O, from 0 to 14% of MgO, from 0 to 5% of ZrO₂, and from 0 to 10% of CaO. Hereinafter, a percentage representation represents a content represented by mole percentage, unless otherwise specified.

Now, with respect to glass for chemical tempering in this embodiment, the reasons for defining the glass composition to be within the above ranges, will be described as follows.

SiO₂ is known to be a component to form a network structure in the fine structure of glass and is a main component to constitute glass. The content of SiO₂ is at least 56%, preferably at least 60%, more preferably at least 63%, further preferably at least 65%. Further, the content of SiO₂ is at most 75%, preferably at most 73%, more preferably at most 72%. The content of SiO₂ being at least 56%, is advantageous from the viewpoint of stability and weather resistance as glass. On the other hand, the content of SiO₂ being at most 75%, is advantageous from the viewpoint of melting properties and moldability.

Al₂O₃ has a function to improve the ion exchange performance in the chemical tempering, and particularly, its function to improve the surface compressive stress (CS) is large. It is known also as a component to improve the weather resistance of glass. Further, it has a function to prevent penetration of tin from the bottom surface during float molding. The content of Al₂O₃ is at least 1%, preferably at least 3%, more preferably at least 5%. Further, the content of Al₂O₃ is at most 20%, preferably at most 17%, more preferably at most 12%, further preferably at most 10%, particularly preferably at most 7%. When the content of Al₂O₃ is at least 1%, it is possible to obtain the desired CS by ion exchange and to obtain the effect to prevent penetration of tin. On the other hand, when the content of Al₂O₃ is at most 20%, devitrification will not substantially increase even in a case where the viscosity of glass is high, such being advantageous from the viewpoint of melting and molding in the production line for soda lime glass.

The total content of SiO₂ and Al₂O₃ i.e. SiO₂ + Al₂O₃ is preferably at most 80%. If it exceeds 80%, the viscosity of glass at a high temperature tends to increase, and melting tends to be difficult, and it is preferably at most 79%, more preferably at most 78%. Further, SiO₂ + Al₂O₃ is preferably at least 70%. If it is less than 70%, when indentation is exerted, the crack resistance tends to decrease, and therefore, it is more preferably at least 72%.

Na₂O is an essential component to form surface compressive stress layers by ion exchange and has a function to deepen the compressive stress depth (DOL). Further, it is a component to lower the high temperature viscosity and devitrification temperature of glass and to improve the melting properties and moldability of glass. The content of Na₂O is at least 8%, preferably at least 12%, more preferably at least 13%. Further, the content of Na₂O is at most 22%, preferably at most 20%, more preferably at most 16%. When the content of Na₂O is at least 8%, it is possible to form the desired surface compressive stress layers by ion exchange. On the other hand, when the content of Na₂O is at most 22%, it is possible to obtain sufficient weather resistance.

K₂O is not essential, but may be contained, as it has an effect to increase the ion exchange rate and to deepen DOL. On the other hand, if K₂O is too much, it tends to be difficult to obtain sufficient CS. In a case where K₂O is contained, its content is preferably at most 10%, more preferably at most 8%, further preferably at most 6%. When the content of K₂O is at most 10%, sufficient CS is obtainable.

MgO is not essential, but is a component to stabilize glass. The content of MgO is preferably at least 2%, more preferably at least 3%, further preferably at least 3.6%. Further, the content of MgO is preferably at most 14%, more preferably at most 8%, further preferably at most 6%. When the content of MgO is at least 2%, the chemical resistance of glass will be good. Further, the melting properties at a high temperature will be good, and devitrification tends to be less likely to occur. On the other hand, when the content of MgO is at most 14%, devitrification being less likely to occur will be maintained, and a sufficient ion exchange rate will be obtainable.

ZrO₂ is not essential, but is generally known to have a function to increase the surface compressive stress in chemical tempering. However, even if a small amount of ZrO₂ is contained, its effect is not large in comparison with its costs. Accordingly, an optional proportion of ZrO₂ may be incorporated within a range permitted by the costs. When it is contained, its content is preferably at most 5%.

CaO is not essential, but is a component to stabilize glass. CaO tends to impair alkali ion exchange, and therefore, when it is desired to increase DOL, its content should better be reduced, or it should better be not contained. On the other hand, in order to improve the chemical resistance, the content of CaO is preferably at least 2%, more preferably at least 4%, further preferably at least 6%. In a case where CaO is contained, its content is preferably at most 10%, more preferably at most 9%, further preferably at most 8.2%. When the content of CaO is at most 10%, it is possible to maintain a sufficient ion exchange rate and to obtain the desired DOL.

SrO is not essential, but may be contained for the purpose of lowering the high temperature viscosity of glass and lowering the devitrification temperature. SrO has a function to lower the ion exchange efficiency, and therefore, particularly in a case where it is desired to increase DOL, it should better be not contained. In a case where SrO is contained, its content is preferably at most 3%, more preferably at most 2%, further preferably at most 1%.

BaO is not essential, but may be contained for the purpose of lowering the high temperature viscosity of glass and lowering the devitrification temperature. BaO has a function to increase the specific gravity of glass, and therefore, in a case where weight reduction is desired, it should better be not contained. In a case where BaO is contained, its content is preferably at most 3%, more preferably at most 2%, further preferably at most 1%.

TiO₂ is present in natural raw materials in many cases and is known to be a coloring source for yellowing. The content of TiO₂ is preferably at most 0.3%, more preferably at most 0.2%, further preferably at most 0.1%. If the content of TiO₂ exceeds 0.3%, the glass tends to be yellowing.

Further, as a clarifier for molten glass, a chloride, a fluoride, etc. may optionally be contained.

The glass of the present invention is essentially composed of the above-described components, but may contain other components within a range not to impair the object of the present invention. In a case where such other components are contained, the total content of them is preferably at most 5%, more preferably at most 3%, typically at most 1%. Such other components will be exemplified below.

ZnO may be contained, for example, up to 2% in order to improve the melting properties at a high temperature of glass. However, in the production by a float process, it is likely to be reduced in a float bath to form product defects and therefore should better be not contained.

B₂O₃ may be contained in a range of less than 1 % in order to improve the melting properties at a high temperature or strength of glass. Usually, if B₂O₃ is contained together with an alkali component such as Na₂O or K₂O, sublimation tends to be intensive to substantially erode bricks, and therefore, B₂O₃ should better be not substantially contained.

Li₂O is a component to lower the strain point to bring about stress relaxation and thereby make it difficult to obtain a stabilized surface compressive stress, and therefore, should better be not contained, and even in a case where it is contained, its content is preferably less than 1%, more preferably at most 0.05%, particularly preferably less than 0.01%.

Other than glass made of such components, soda lime silica glass may be employed within a range where the desired stress value is obtainable.

As mentioned above, it has been unexpected how much scratches are formed on the main surface of a glass plate if exposed to the rain, wind and dust over a long period of time e.g. 10 years or 20 years, and with respect to concern about breakage of the glass plate which is thereby likely to result, no attention has been paid by any body. The present inventors have conducted analyses as to how and how much scratches are formed on the main surface of a glass plate when exposed to the outdoor environment for 20 years in such a manner.

### (Analysis Example 1)

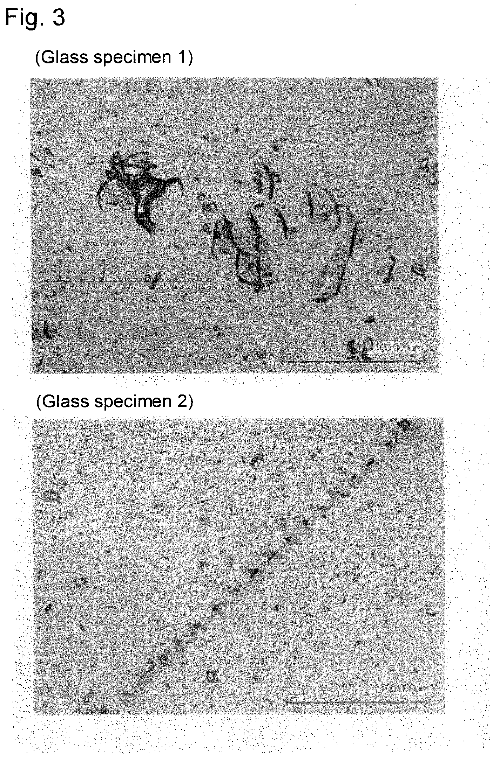

Two plates of building window glass (wire-reinforced glass: 850 × 850 mm) were recovered which were installed for 20 years in a building located in Keihin factory district in Japan in a vicinity of a road where trucks and cars frequently passed and where incoming fugitive dust was substantial. From each window glass, three glass specimens of 200 × 200 mm were taken out, and among scratches visually distinctly observed as formed on the main surface faced outdoors, the maximum depth in the plate thickness direction of each specimen was measured. The measurement was conducted by a laser microscope after the main surface was subjected to etching to make scratches to be clear. The results are shown in Table 1. The number of each glass specimen in the Table shows the number of a glass specimen taken out from the portion indicated in the front side schematic view of the window glass in Fig. 2(a). Further, Fig. 3 shows enlarged photographs of the main surfaces of the glass specimens 1 and 2. Here, the plate thickness of such window glass was 6.8 mm.

### (Analysis Example 2)

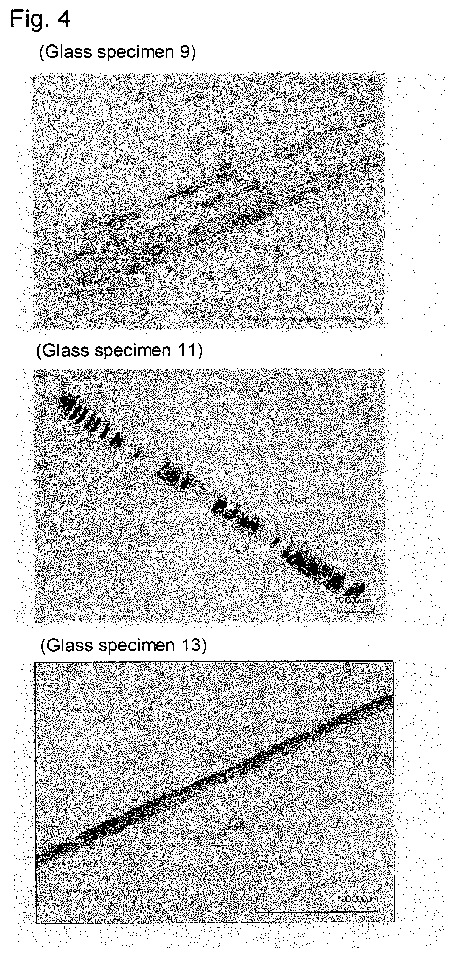

One plate of building window glass (float glass: 855 × 1150 mm) was recovered which was installed for 20 years in a factory located in Keihin factory district in Japan and facing the sea as exposed to the rain and wind containing fugitive dust and salt content. From such window glass, eight glass specimens of 200 × 200 mm were taken out, and among scratches visually distinctly observed as formed on the main surface faced outdoors, the maximum depth (unit: µm) in the plate thickness direction of each specimen was measured. The measurement was conducted by a laser microscope after the main surface was subjected to etching to make scratches to be clear. The results are shown in Table 1. The number of each glass specimen in Table 1 shows the number of a glass specimen taken out from the portion indicated in the front side schematic view of the window glass in Fig. 2(b). Further, Fig. 4 shows enlarged photographs of the main surfaces of the glass specimens 9, 11 and 13. Here, the plate thickness of such window glass was 5.0 mm.

**Table 1**

| | | |
|---|---|---|
| Analysis Example 1 | Glass specimen 1 | 9.7 |
| | Glass specimen 2 | 1.8 |
| | Glass specimen 3 | 0.1 |
| | Glass specimen 4 | No distinct scratch |
| | Glass specimen 5 | 1.7 |
| | Glass specimen 6 | 3.1 |
| Analysis Example 2 | Glass specimen 7 | 0.7 |
| | Glass specimen 8 | 5.0 |
| | Glass specimen 9 | 1.6 |
| | Glass specimen 10 | 1.1 |
| | Glass specimen 11 | 1.4 |
| | Glass specimen 12 | 1.8 |
| | Glass specimen 13 | 2.1 |
| | Glass specimen 14 | 3.4 |

From the above results, it has been found that the depth of a scratch formed on the main surface of the glass plate installed for 20 years in an area where the wind and rain or the fugitive dust was substantial, is about 9 µm at the maximum. Therefore, by adjusting the thickness of the compressive stress layers of the chemically tempered glass plate for outdoor use of the present invention to be at least 10 µm, preferably at least 15 µm in order to have the increase in strength sufficiently exhibited by the compressive stress layers, it is possible to prevent a scratch from penetrating through the compressive stress layers and to reduce breakage of the glass plate even if exposed to an outdoor environment over a long period of time.

On the other hand, during the use for a long period of time, not only the glass plate is left in a natural environment, but also an unexpected impact may be exerted to the glass plate. When such an impact is exerted to the glass plate, breakage of the glass plate may sometimes be unavoidable. Since a chemically tempered glass plate has a compressive stress in its interior, at the time of breakage, broken fragments may be scattered by release of the energy stored in the interior. Such scattering may exceeds 5 m, if the energy stored in the interior is large. In order to suppress such scattering distance, it is necessary to minimize the energy stored in the interior. Therefore, in the chemically tempered glass plate for outdoor use of the present invention, the thickness of the surface compressive stress layers is set to be at most 30 µm in order to maximize the surface compressive stress values at the main surfaces and to minimize the tensile stress value at the interior. The thickness of the compressive stress layers is more preferably at most 28 µm.

Further, the chemically tempered glass plate for outdoor use of the present invention preferably has the following construction in order to reduce concern about breakage due to a bending force to be exerted to the glass plate by wind pressure, etc. That is, the chemically tempered glass plate for outdoor use of the present invention preferably has a concentric bending strength of at least 294 N. This concentric bending strength is measured with respect to a sample for measurement prepared by the following method:
(1) from the chemically tempered glass plate for outdoor use, a square-shaped glass specimen of 50 mm in length and 50 mm in breadth in planar view was taken,
(2) within a range of 10 mm up and down from the center line in the above breadth direction and along a line translated 3 mm to the right-hand side from the center line in the above length direction, a 10 mm × 10 mm square-shaped sand paper #400 is reciprocated three times under a load of 1.5 kgf, to form abrasion lines of 20 mm in length in the length direction on the first main surface,
(3) on a supporter ring with a diameter of 30 mm, the glass specimen is set so that the first main surface of the glass specimen is in contact with the supporter ring, and the center points of the glass specimen and the supporter ring overlap each other,
(4) on the glass specimen, a load ring with a diameter of 10 mm is mounted so that the center points of both overlap each other, and
(5) a load of 1 mm/min. is exerted on the glass specimen from the load ring side, whereby a load under which the glass specimen undergoes breakage is taken as the concentric bending strength.

Here, as the chemically tempered glass plate for outdoor use in the above test, "LEOFLEX" (registered trade mark) manufactured by Asahi Glass Co., Ltd., one having a thickness of 1.1 mm, was used.

This is a simulation test wherein scratches on the main surface which would be formed when exposed to an outdoor environment for a long period of time, are formed in a simulation, to show that even if such scratches are present, the glass plate has a sufficient bending strength. That is, when the test of (1) to (5) was conducted on soda lime silica glass having a plate thickness of 1.1 mm and having no tempering treatment applied, the concentric bending strength was found to be 245 N, and therefore, it was judged that the bending strength should be sufficient if the same test result is at least 1.2 times i.e. at least 294 N.

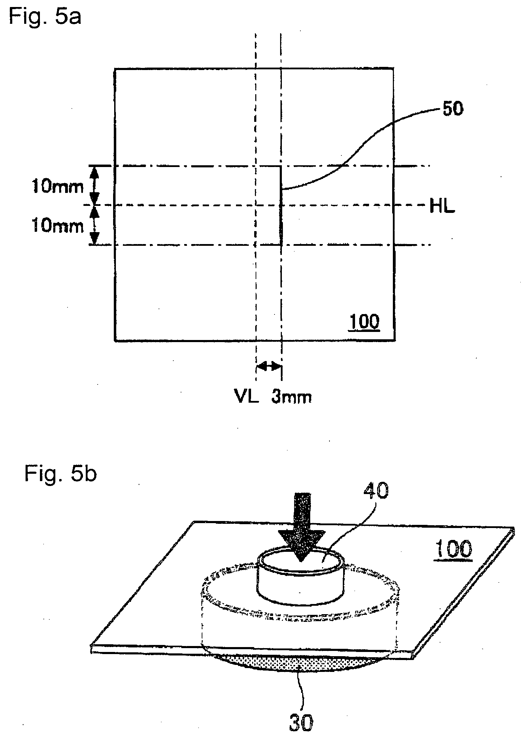

With reference to Fig. 5, this test will be described in detail. Firstly, glass specimens of 50 mm in length and 50 mm in breadth in planar view are cut out.

### (Step for forming abrasion lines)

In a square-shaped glass specimen 100 of 50 mm in length and 50 mm in breadth, within a range of 10 mm up and down from the center line HL in the breadth direction in planar view, a line (abrasion region) translated 3 mm to the right-hand side from the center line VL in the length direction, is set. Then, a 10 mm × 10 mm square-shaped sand paper #400 is fixed to the tip of a load cell. This load cell is reciprocated three times along the abrasion region while exerting a load of 1.5 kgf to the glass specimen 100, to form abrasion lines 50 of 20 mm in length on one main surface of the glass specimen 100.

### (Step for measuring concentric bending strength)

The main surface of the glass specimen having abrasion lines 50 formed, is mounted on a supporter ring 30 having a diameter of 30 mm. Then, a load ring 40 having a diameter of 10 mm is mounted thereon. At that time, the respective members are disposed so that the center points of the glass specimen 100, the supporter ring 30 and the load ring 40 overlap one another. Then, a load is exerted at 1 mm/min. to the glass specimen from the load ring 40 side, whereby a load when the glass specimen undergoes breakage, is obtainable.

### INDUSTRIALAPPLICABILITY

The chemically tempered glass plate for outdoor use of the present invention is a chemically tempered glass that dispels concern about breakage due to scratches formed as a result of being exposed to an outdoor environment of the rain and wind or fugitive dust over a long period of time and that is suitable for building windows, exterior walls, solar cell cover glass, vehicle windows, etc., to be used for a long period of time e.g. for 10 years or 20 years.

The entire disclosure of Japanese Patent Application No. 2013-083979 filed on April 12, 2013 including specification, claims, drawings and summary is incorporated herein by reference in its entirety.

### REFERENCE SYMBOLS

10: chemically tempered glass plate for outdoor use, 11 a: first main surface, 11b: second main surface, 12: end surface, 30: supporter ring, 40: load ring, 50: abrasion lines, 100: glass specimen

## Claims

1. A chemically tempered glass plate for outdoor use, which has first and second main surfaces and an end surface interposed between the first and second main surfaces, wherein surface compressive stresses are formed at both the main surfaces; a tensile stress is formed at the interior; the thickness is from 1.0 to 6.0 mm; both the main surfaces have surface compressive stress of from 400 to 1,000 MPa; and thicknesses of the compressive stress layers in the plate thickness direction at both the main surfaces are from 10 to 30 µm.

2. The chemically tempered glass plate for outdoor use according to Claim 1, which is for a building window.

3. The chemically tempered glass plate for outdoor use according to Claim 1, which is for an exterior wall.

4. The chemically tempered glass plate for outdoor use according to Claim 1, which is for a solar cell cover glass.

5. The chemically tempered glass plate for outdoor use according to Claim 1, which is for a vehicle window.

6. The chemically tempered glass plate for outdoor use according to any one of Claims 1 to 5, wherein the area of each main surface is at least 2,500 cm².

7. The chemically tempered glass plate for outdoor use according to any one of Claims 1 to 6, which has a concentric bending strength of at least 294 N.

8. The chemically tempered glass plate for outdoor use according to any one of Claims 1 to 7, which has a concentric bending strength of at least 294 N as measured with respect to a sample prepared by the following method:
(1) from the chemically tempered glass plate for outdoor use, a square-shaped glass specimen of 50 mm in length and 50 mm in breadth in planar view was taken,
(2) within a range of 10 mm up and down from the center line in the above breadth direction and along a line translated 3 mm to the right-hand side from the center line in the above length direction, a 10 mm × 10 mm square-shaped sand paper #400 is reciprocated three times under a load of 14.7 N, to form abrasion lines of 20 mm in length in the length direction on the first main surface,
(3) on a supporter ring with a diameter of 30 mm, the glass specimen is set so that the first main surface of the glass specimen is in contact with the supporter ring, and the center points of the glass specimen and the supporter ring overlap each other,
(4) on the glass specimen, a load ring with a diameter of 10 mm is mounted so that the center points of both overlap each other, and
(5) a load of 1 mm/min. is exerted on the glass specimen from the load ring side, whereby a load under which the glass specimen undergoes breakage is taken as the concentric bending strength.

9. The chemically tempered glass plate for outdoor use according to any one of Claims 1 to 8, wherein the thickness is from 1.0 to 4.0 mm.

10. The chemically tempered glass plate for outdoor use according to any one of Claims 1 to 8, wherein the thickness is from 3.0 to 6.0 mm.

11. The chemically tempered glass plate for outdoor use according to any one of Claims 1 to 10, which is made of glass comprising, as represented by mole percentage based on the following oxides, from 56 to 75% of SiO₂, from 5 to 20% of Al₂O₃, from 8 to 22% of Na₂O, from 0 to 10% of K₂O, from 0 to 14% of MgO, from 0 to 5% of ZrO₂, and from 0 to 5% of CaO.

12. The chemically tempered glass plate for outdoor use according to any one of Claims 1 to 10, which is made of glass comprising, as represented by mole percentage based on the following oxides, from 56 to 75% of SiO₂, from 1 to 20% of Al₂O₃, from 8 to 22% of Na₂O, from 0 to 10% of K₂O, from 0 to 14% of MgO, from 0 to 5% of ZrO₂, and from 0 to 10% of CaO.

13. Laminated glass which comprises plural glass plates and an interlayer disposed between adjacent glass plates thereof, wherein at least one of the plural glass plates is a chemically tempered glass plate for outdoor use wherein the thickness is at least 0.5 mm and at most 6.0 mm; the first main surface and the second main surface of the glass plate have surface compressive stresses of from 400 to 1,000 MPa; and the thicknesses of the compressive stress layers in the plate thickness direction at both the main surfaces are from 10 to 30 µm.
